# EUROPÄISCHE PATENTSCHRIFT

(11) **EP 3 069 400 B1**
(45) Veröffentlichungstag und Bekanntmachung des Hinweises auf die Patenterteilung: **19.12.2018**
(21) Anmeldenummer: 14821045.3
(22) Anmeldetag: 22.10.2014
(51) Int. Cl.: H01M 4/36, H01M 10/36, H01M 10/39, H01M 10/42, H01M 10/615

(54) **ENERGIESPEICHERANORDNUNG, DEREN VERWENDUNG UND ENERGIESPEICHERZELLENANORDNUNG**
ENERGY STORAGE ARRANGEMENT, USE THEREOF, AND ENERGY STORAGE CELL ARRANGEMENT
SYSTÈME ACCUMULATEUR D'ÉNERGIE, SON UTILISATION, ET SYSTÈME DE CELLULES ACCUMULATRICES D'ÉNERGIE

(30) Priorität: 14.11.2013 DE 102013112555
(43) Veröffentlichungstag der Anmeldung: 21.09.2016
(73) Patentinhaber: Helmholtz-Zentrum Dresden - Rossendorf e.V., 01328 Dresden (DE)
(72) Erfinder: STEFANI, Frank, 01099 Dresden (DE); GALINDO, Vladimir, 01705 Freital (DE); WEBER, Norbert, 01307 Dresden (DE); WEIER, Tom, 01328 Dresden (DE); GERBETH, Gunter, 01328 Dresden (DE)
(86) Internationale Anmeldenummer: PCT/DE2014/100376
(87) Internationale Veröffentlichungsnummer: WO 2015/070842

(56) Entgegenhaltungen:
- DE-A1-102010 002 931
- US-A1- 2011 014 505
- US-A1- 2011 027 628
- FRANK STEFANI ET AL: "How to circumvent the size limitation of liquid metal batteries due to the Tayler instability", ENERGY CONVERSION AND MANAGEMENT, ELSEVIER SCIENCE PUBLISHERS, OXFORD, GB, Bd. 52, Nr. 8, 10. März 2011 (2011-03-10), Seiten 2982-2986, XP028221457, ISSN: 0196-8904, DOI: 10.1016/J.ENCONMAN.2011.03.003 [gefunden am 2011-04-19]

## Beschreibung

Die Erfindung betrifft eine Energiespeicheranordnung, deren Verwendung und eine Energiespeicherzellenanordnung.

Im Allgemeinen kann es bei der Energieversorgung notwendig sein, einen Ausgleich zwischen dem Angebot an erzeugtem elektrischen Strom und der schwankenden Nachfrage nach elektrischem Strom zu schaffen, vor allem bei einem Einsatz von zeitlich fluktuierenden Energiequellen, beispielsweise bei einem Einsatz von Windkraftwerken, solarthermischen Kraftwerken oder Photovoltaik-Kraftwerken. Der Ausgleich kann beispielsweise mittels Pumpspeicherwerken, Druckluftspeichern und/oder Schwungrädern erfolgen. Beim Einsatz elektrochemischer Energiespeicher können sich allerdings bei den herkömmlich zur Verfügung stehenden Batterien oder Akkumulatoren neben den zu hohen Kosten auch bautechnische und/oder anwendungsbedingte Probleme ergeben.

Die US 2011/027628 A1 beschreibt elektrochemische Zellen mit zwei flüssigen Elektrodenschichten, einer flüssigen Elektrolytschicht und einem oder mehreren Sensoren zum Erfassen von Betriebsparametern der Zelle, wobei zudem Fluidführungsstrukturen zum Beeinflussen von Fluidströmungen innerhalb der Zelle in Abhängigkeit von den Sensorsignalen vorgesehen sein können.

In DE 10 2010 002 931 A1 und in dem Artikel "How to circumvent the size limitation of liquid metal batteries due to the Tayler instability" (F. Stefani et al., Energy Conversion and Management 52, 2011, S. 2982 ff.) werden elektrochemische Zellen mit zwei flüssigen Elektrodenschichten und einer flüssigen Elektrolytschicht beschrieben, wobei zur Verhinderung von Tayler-Instabilitäten ein elektrischer Strom durch einen vertikal innerhalb der Zelle verlaufenden elektrischen Leiter erzeugt werden kann, mittels dessen ein azimutales Magnetfeld erzeugt wird.

Die US 2011/014505 A1 beschreibt elektrochemische Zellen mit zwei flüssigen Elektrodenschichten, einer flüssigen Elektrolytschicht und einem Zirkulationserzeuger zum Erzeugen einer Zirkulation innerhalb einer der flüssigen Schichten.

Die Erfindung betrifft eine Energiespeicheranordnung gemäß Anspruch 1, eine Verwendung derselben gemäß Anspruch 8 und eine Energiespeicherzellenanordnung gemäß Anspruch 9; Ausführungsformen ergeben sich aus den abhängigen Ansprüchen.

Ein Aspekt verschiedener Ausführungsformen kann anschaulich darin gesehen werden, eine elektrochemische Zelle zum Speichern elektrischer Energie bereitzustellen, wobei die elektrochemische Zelle einen einfachen konstruktiven Aufbau mit einer effizienten Platzausnutzung aufweist, was beispielsweise eine hohe Energiespeicherdichte (gespeicherte elektrische Energie bezogen auf das Gesamtvolumen der elektrochemischen Zelle) ermöglichen kann, wobei die elektrochemische Zelle gleichzeitig derart eingerichtet ist, dass der elektrische Strom (der Ladestrom und/oder der Entladestrom) zum Laden und/oder Entladen der elektrochemischen Zelle, die Funktionsfähigkeit der elektrischen Zelle nicht beeinträchtigt.

Eine elektrochemische Zelle kann mittels flüssiger Komponenten realisiert sein oder werden, wobei die elektrochemische Zelle derart eingerichtet ist, dass die flüssigen Komponenten (Anode, Kathode und Elektrolyt) während des Betriebs der elektrochemischen Zelle in Schichten übereinander angeordnet sind, bzw. sich aufgrund ihrer jeweiligen Dichte (Massedichte) von selbst schichtförmig anordnen, wobei die flüssige Anode (z.B. die flüssige Anodenschicht) und die flüssige Kathode (z.B. die flüssige Kathodenschicht) mittels des flüssigen Elektrolyten (z.B. mittels der flüssigen Elektrolytschicht) voneinander separiert sind.

Verschiedene Ausführungsformen basieren unter anderem auf der Erkenntnis, dass bei einer elektrochemischen Zelle mit flüssigen Komponenten (Anode, Kathode, Elektrolyt) der elektrische Strom, welcher in der elektrochemischen Zelle fließt, die flüssigen Komponenten beeinflussen kann. Dies kann beispielsweise bei elektrochemischen Zellen mit flüssigen Komponenten das Skalieren der Zellen zu großen Volumen (z.B. mehr als 0,1 m³) hin erschweren oder unmöglich machen. Beispielsweise kann bei einem elektrischen Strom größer als eine kritische Stromstärke, wobei die kritische Stromstärke beispielsweise von den Materialparametern und der Höhe der elektrochemischen Zelle beeinflusst wird, eine Strömung in zumindest einer der flüssigen Komponenten verursacht werden (z.B. aufgrund der sogenannten Tayler-Instabilität), wobei diese Strömung die Funktionsweise der elektrochemischen Zelle beeinträchtigen kann. Beispielsweise kann es zu einer teilweisen Durchmischung der flüssigen Komponenten kommen oder das Schichtsystem, zu dem sich die flüssigen Komponenten anordnen, kann gestört werden, so dass es zu einem Kurzschluss kommen kann, z.B. kann die flüssige Anode einen direkten Kontakt mit der flüssigen Kathode bekommen. Anschaulich gesehen wird eine Energiespeicheranordnung basierend auf einer elektrochemischen Zelle bereitgestellt, wobei die Energiespeicheranordnung derart eingerichtet ist, dass das Auftreten einer Strömung (z.B. das Auftreten der Tayler-Instabilität) innerhalb der flüssigen Komponenten der elektrochemischen Zelle verhindert oder zumindest die Stärke der Strömung verringert wird, bzw. dass die kritische Stromstärke bis zum Auftreten einer Strömung (z.B. der Tayler-Instabilität) innerhalb der flüssigen Komponenten der elektrochemischen Zelle erhöht ist.

Mit anderen Worten kann eine Energiespeicheranordnung basierend auf einer elektrochemischen Zelle bereitgestellt sein oder werden, wobei die Funktionsweise der Energiespeicheranordnung auch bei einem hohen Ladestrom und/oder Entladestrom nicht durch das Auftreten einer Strömung (oder Aufgrund der Tayler-Instabilität) in den flüssigen Komponenten der elektrochemischen Zelle beeinträchtigt wird. Gleichzeitig soll die Speicherdichte der elektrochemischen Zelle bzw. der Energiespeicheranordnung möglichst hoch, beispielsweise maximal, sein und der Aufbau der elektrochemischen Zelle bzw. der Energiespeicheranordnung möglichst einfach gehalten werden, so dass die Energiespeicheranordnung kosteneffizient, beispielsweise in großem Maßstab, eingesetzt werden kann.

Ferner kann ein anderer Aspekt verschiedener Ausführungsformen anschaulich darin gesehen werden, eine Energiespeicherzellenanordnung bereitzustellen, welche mehrere elektrochemische Zellen aufweist, wobei die mehreren elektrochemischen Zellen mittels einer gemeinsamen Magnetfelderzeugungsstruktur stabilisiert sein können oder werden können. Beispielsweise kann eine elektrochemische Zelle der Energiespeicherzellenanordnung mit einer elektromagnetischen Spule gekoppelt sein, wobei diese Spule im Betrieb der Energiespeicherzellenanordnung ein Magnetfeld erzeugt, welches die mehreren elektrochemischen Zellen der Energiespeicherzellenanordnung durchdringt.

Gemäß verschiedenen Ausführungsformen weist die Energiespeicheranordnung unter anderem Folgendes auf: mindestens eine elektrochemische Zelle, wobei die mindestens eine elektrochemische Zelle eine im Betrieb flüssige erste Elektrode (beispielsweise Anode), einen im Betrieb flüssigen Elektrolyten und eine im Betrieb flüssige zweite Elektrode (beispielsweise Kathode) aufweist; und eine außerhalb des Außenumfangs der mindestens einen elektrochemischen Zelle angeordnete Magnetfelderzeugungsstruktur zum Erzeugen eines Magnetfeldes, wobei die Magnetfelderzeugungsstruktur derart eingerichtet ist, dass das erzeugte Magnetfeld die mindestens eine elektrochemische Zelle durchdringt, beispielsweise durch den Außenumfang der mindestens einen elektrochemischen Zelle.

Anschaulich ist das Magnetfeld derart bereitgestellt, dass die flüssige Anode, der flüssige Elektrolyt und/oder die flüssige Kathode der mindestens einen elektrochemischen Zelle stabilisiert werden. Mit anderen Worten kann beispielsweise das Auftreten einer Strömung innerhalb der elektrochemischen Zelle verhindert oder zumindest reduziert werden, oder der kritische Strom, ab dem eine Strömung innerhalb der elektrochemischen Zelle auftreten kann, kann vergrößert werden. Dies gewährleistet die Funktionsfähigkeit der elektrochemischen Zelle beim Laden der elektrochemischen Zelle mit einem hohen elektrischen Strom, z.B. in einem Bereich von einigen Kiloampere bis zu einigen Megaampere, oder die Funktionsfähigkeit der elektrochemischen Zelle beim Entnehmen eines hohen elektrischen Stroms aus der elektrochemischen Zelle. Somit kann die Energiespeicheranordnung als kurzfristiger elektrochemischer Energiespeicher genutzt werden. Ferner ist die Energiespeicheranordnung anschaulich derart eingerichtet, dass die Strömungsdynamik innerhalb der elektrochemischen Zelle mittels des von außen erzeugten magnetischen Feldes beeinflusst wird. Somit kann auf weitere Maßnahmen, welche beispielsweise einen komplexeren Aufbau benötigen würden, verzichtet werden. Beispielsweise kann die elektrochemische Zelle eine Zylinderform, eine Quaderform (oder Würfelform) oder eine beliebige prismatische Form aufweisen.

Gemäß der Erfindung ist die Magnetfelderzeugungsstruktur außerhalb der elektrochemischen Zelle angeordnet, so dass das Magnetfeld von außen in die elektrochemische Zelle eindringen kann. Somit muss die elektrochemische Zelle beispielsweise keine Durchgangslöcher oder Aussparungen aufweisen, in welchen die Magnetfelderzeugungsstruktur untergebracht ist. Anschaulich gesehen kann die elektrochemische Zelle eine beliebige äußere Form oder Oberfläche aufweisen. Der wirksame Teil der Magnetfelderzeugungsstruktur erstreckt sich beispielsweise nicht durch die elektrochemische Zelle hindurch.

Gemäß der Erfindung ist die Magnetfelderzeugungsstruktur außerhalb der elektrochemischen Zelle angeordnet und eingerichtet. Somit kann das Design der elektrochemischen Zelle selbst unabhängig von der Magnetfelderzeugungsstruktur gewählt sein oder werden. Somit kann beispielsweise verhindert werden, dass zwangsläufig ein Hohlkörper als elektrochemische Zelle verwendet werden muss. Damit kann die Raumeffizienz (die Energiespeicherdichte) vergrößert sein oder werden. Ferner kann die Energiespeicheranordnung kostengünstig hergestellt werden und/oder kann beispielsweise wenig fehleranfällig sein, beispielsweise aufgrund des simplen Aufbaus.

Gemäß verschiedenen Ausführungsformen weist die Energiespeicheranordnung unter anderem auf: mindestens eine elektrochemische Zelle, wobei die mindestens eine elektrochemische Zelle eine im Betrieb flüssige Anode, einen im Betrieb flüssigen Elektrolyten und eine im Betrieb flüssige Kathode aufweist; und eine außerhalb der mindestens einen elektrochemischen Zelle angeordnete Magnetfelderzeugungsstruktur zum Erzeugen eines Magnetfeldes, wobei die Magnetfelderzeugungsstruktur derart eingerichtet ist, dass das mittels der Magnetfelderzeugungsstruktur außerhalb der elektrochemischen Zelle erzeugte Magnetfeld die mindestens eine elektrochemische Zelle durchdringt.
Gemäß verschiedenen Ausführungsformen kann die im Betrieb flüssige Anode der elektrochemischen Zelle mindestens eins von Folgendem aufweisen: ein Metall, eine Metalllegierung, ein Halbmetall und eine Halbmetalllegierung.

Gemäß verschiedenen Ausführungsformen kann die im Betrieb flüssige Kathode der elektrochemischen Zelle mindestens eins von Folgendem aufweisen: ein Metall, eine Metalllegierung, ein Halbmetall und eine Halbmetalllegierung.
Ferner kann die Magnetfelderzeugungsstruktur einen Permanentmagneten oder mehrere Permanentmagneten aufweisen. Der eine Permanentmagnet oder die mehreren Permanentmagneten können beispielsweise in einem Abstand zu der elektrochemischen Zelle derart relativ zu der elektrochemischen Zelle angeordnet sein, dass das entsprechend erzeugte Magnetfeld die elektrochemische Zelle von außen durchdringt.

Ferner kann die Magnetfelderzeugungsstruktur eine elektrisch leitfähige Spulen-Anordnung aufweisen. Die elektrisch leitfähige Spulen-Anordnung kann beispielsweise in einem Abstand zu der elektrochemischen Zelle derart relativ zu der elektrochemischen Zelle angeordnet sein, dass ein entsprechend mittels der elektrisch leitfähigen Spulen-Anordnung erzeugtes Magnetfeld die elektrochemische Zelle von außen durchdringt. Die elektrisch leitfähige Spulen-Anordnung kann eine oder mehrere Spulen aufweisen.

Gemäß der Erfindung bilden die im Betrieb flüssige Anode, der im Betrieb flüssige Elektrolyt und die im Betrieb flüssige Kathode eine Schichtstruktur mit mindestens einer Grenzfläche. Dabei können die jeweiligen Materialien der Komponenten (Anode, Elektrolyt und Kathode) eine jeweils verschiedene Massedichte aufweisen, so dass sich die Schichtstruktur der flüssigen Komponenten im Schwerefeld der Erde ausbildet. Die Magnetfelderzeugungsstruktur ist derart eingerichtet, dass eine Magnetfeldkomponente des erzeugten Magnetfeldes parallel zu einer Flächennormalen der mindestens einen Grenzfläche der Schichtstruktur steht. Anschaulich gesehen können sich die flüssigen Komponenten der elektrochemischen Zelle im Gravitationsfeld der Erde ausrichten, und eine Magnetfeldkomponente des erzeugten Magnetfeldes liegt parallel zur ausrichtend wirkenden Gravitationskraft.

Ferner kann die Magnetfelderzeugungsstruktur eine Spulen-Anordnung aufweisen, welche derart eingerichtet sein kann, dass die mindestens eine elektrochemische Zelle zwischen einer ersten Spule der Spulen-Anordnung und einer zweiten Spule der Spulen-Anordnung positioniert ist. Ferner kann die Spulen-Anordnung eine Helmholtz-Spulen-Anordnung sein, wobei zwischen den Spulen der Helmholtz-Spulen-Anordnung ein im Wesentlichen homogenes Magnetfeld erzeugt sein kann oder werden kann.

Ferner kann die Magnetfelderzeugungsstruktur elektrisch leitend mit der mindestens einen elektrochemischen Zelle verbunden sein, so dass bei einem Laden oder Entladen der mindestens einen elektrochemischen Zelle ein Strom durch die Magnetfelderzeugungsstruktur hindurch fließt oder innerhalb der Magnetfelderzeugungsstruktur fließt. Beispielsweise kann mindestens eine Spule der Magnetfelderzeugungsstruktur elektrisch leitend mit der mindestens einen elektrochemischen Zelle verbunden sein, so dass bei einem Laden oder Entladen der mindestens einen elektrochemischen Zelle ein Strom durch die mindestens eine Spule der Magnetfelderzeugungsstruktur hindurch fließt.

Die Energiespeicheranordnung kann beispielsweise mindestens eine Wärmequelle aufweisen zum Erwärmen der mindestens einen elektrochemischen Zelle. Mittels der Wärmequelle können die Komponenten der elektrochemischen Zelle verflüssigt werden oder zumindest teilweise verflüssigt werden. Ferner kann die elektrochemische Zelle mittels des Ladestroms oder mittels des Entladestroms geheizt werden.

Gemäß verschiedenen Ausführungsformen kann eine Energiespeicheranordnung (wie hierin beschrieben) zum Speichern elektrischer Energie mittels einer chemischen Reaktion in mindestens einer elektrochemischen Zelle verwendet werden. Ferner kann eine Magnetfelderzeugungsstruktur außerhalb der elektrochemischen Zelle verwendet werden, um die elektrochemische Zelle zu stabilisieren, z.B. um eine Funktionsbeeinträchtigung durch eine auftretende Tayler-Instabilität zu reduzieren oder zu verhindern. Gemäß verschiedenen Ausführungsformen kann eine Energiespeicherzellenanordnung (wie hierin beschrieben) zum Speichern elektrischer Energie mittels einer chemischen Reaktion in mindestens einer elektrochemischen Zelle verwendet werden.

Gemäß verschiedenen Ausführungsformen kann die elektrochemische Zelle ein konvexes Zellengehäuse aufweisen, in welchem die flüssigen Komponenten der elektrochemischen Zelle aufgenommen sein können.

Ferner kann die elektrochemische Zelle einen ersten elektrischen Kontakt aufweisen, angrenzend (anders ausgedrückt in körperlichem Kontakt) und/oder elektrisch leitend (Elektronenleitung) verbunden mit der ersten Elektrode (beispielsweise Anode) der elektrochemischen Zelle. Ferner kann die elektrochemische Zelle einen zweiten elektrischen Kontakt aufweisen, angrenzend (anders ausgedrückt in körperlichem Kontakt) oder elektrisch leitend (Elektronenleitung) verbunden mit der zweiten Elektrode (beispielsweise Kathode) der elektrochemischen Zelle. Ferner kann die Magnetfelderzeugungsstruktur außerhalb des Bereichs zwischen dem ersten elektrischen Kontakt und dem zweiten elektrischen Kontakt angeordnet sein. Anschaulich kann der Bereich zwischen dem ersten elektrischen Kontakt und dem zweiten elektrischen Kontakt frei von der Magnetfelderzeugungsstruktur sein, so dass in diesem Bereich die flüssigen Komponenten der elektrochemischen Zelle angeordnet sein können, so dass die Speicherkapazität der elektrochemischen Zelle optimiert ist.

Gemäß verschiedenen Ausführungsformen kann eine Energiespeicherzellenanordnung Folgendes aufweisen: eine Zellenanordnung aufweisend mehrere elektrochemische Zellen, wobei jede der mehreren elektrochemischen Zellen eine im Betrieb flüssige erste Elektrode (beispielsweise Anode), einen im Betrieb flüssigen Elektrolyten und eine im Betrieb flüssige zweite Elektrode (beispielsweise Kathode) aufweist; und mindestens eine elektromagnetische Spule zum Erzeugen eines Magnetfeldes, wobei die mindestens eine elektromagnetische Spule außerhalb der Zellenanordnung derart angeordnet und eingerichtet ist, dass das erzeugte Magnetfeld jede der mehreren elektrochemischen Zellen durchdringt.

Gemäß verschiedenen Ausführungsformen kann eine Energiespeicherzellenanordnung Folgendes aufweisen: eine Zellenanordnung aufweisend mehrere elektrochemische Zellen, wobei jede der mehreren elektrochemischen Zellen eine im Betrieb flüssige erste Elektrode (beispielsweise Anode), einen im Betrieb flüssigen Elektrolyten und eine im Betrieb flüssige zweite Elektrode (beispielsweise Kathode) aufweist; und mindestens eine elektromagnetische Spule zum Erzeugen eines Magnetfeldes, wobei die mindestens eine elektromagnetische Spule außerhalb der mehreren elektrochemischen Zellen derart angeordnet und eingerichtet ist, dass das erzeugte Magnetfeld jede der mehreren elektrochemischen Zellen durchdringt.

Ausführungsbeispiele der Erfindung sind in den Figuren dargestellt und werden im Folgenden näher erläutert.

Es zeigen
- Figuren 1A und 1B: jeweils in einer schematischen Seitenansicht oder Querschnittsansicht eine elektrochemische Zelle, gemäß verschiedenen Ausführungsformen;
- Figuren 1C bis 1F: jeweils in einer schematischen Seitenansicht oder Querschnittsansicht eine Energiespeicheranordnung, gemäß verschiedenen Ausführungsformen;
- Figur 2: eine Energiespeicheranordnung in einer schematischen Seitenansicht oder Querschnittsansicht, gemäß verschiedenen Ausführungsformen;
- Figur 3: einen Zusammenhang zwischen dem kritischen Strom in der elektrochemischen Zelle und dem Strom in einer Spule, wobei die Spule die elektrochemische Zelle stabilisiert;
- Figuren 4 bis 8: jeweils eine Energiespeicheranordnung in einer schematischen Ansicht, gemäß verschiedenen Ausführungsformen;
- Figur 9: eine Energiespeicherzellenanordnung in einer schematischen Ansicht, gemäß verschiedenen Ausführungsformen; und
- Figuren 10A bis 10C: jeweils eine Energiespeicherzellenanordnung in einer schematischen Seitenansicht oder Querschnittsansicht, gemäß verschiedenen Ausführungsformen.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Im Allgemeinen kann eine elektrochemische Zelle (z.B. eine Batterie, eine wiederaufladbare Batterie bzw. ein Akkumulator), flüssige Elektrodenmaterialien aufweisen, so dass die Nutzungsdauer der elektrochemischen Zelle gegenüber herkömmlicher elektrochemischer Zellen mit festen Elektroden verlängert sein kann, wobei die Zellen mit festen Elektroden beispielsweise aufgrund alterungsbedingter Veränderungen der Elektrodenstrukturen in ihrer Nutzungsdauer eingeschränkt sein können. Akkumulatoren mit flüssigen Elektroden sind beispielsweise Natrium-Schwefel (NaS) Batterien und Natrium-Nickelchlorid (ZEBRA) Batterien. Bei beiden Akkumulatoren ist der Elektrolyt eine β"-Al₂O₃-Keramik, die bei höheren Temperaturen Natrium-Ionen leitet (Festelektrolyt). Der Festelektrolyt (eine Keramik) kann jedoch beispielsweise zerbrechlich sein und/oder empfindlich gegenüber thermischen Schocks sein, so dass der realisierbare Durchmesser solcher einzelner Zellen in der Praxis auf einige Zentimeter limitiert sein kann. Dadurch, dass der Preis dieser Zellen vom Verhältnis der Oberfläche der Zelle zum Volumen des Inventars abhängt, ist die durch den Einsatz von Festelektrolyten bedingte Größenlimitierung auch ein Hindernis für den großskaligen und ökonomisch vertretbaren Einsatz dieser Batterien zum Speichern elektrischer Energie in der Energieversorgung.

Ferner kann eine elektrochemische Zelle neben den flüssigen Elektrodenmaterialien gleichzeitig einen flüssigen Elektrolyten aufweisen. Dabei können Halbmetalle oder Metalle als positive Elektrode (Kathode, die Benennung erfolgt konventionell nach der Funktion beim Entladen) fungieren, z.B. Arsen, Antimon, Bismut, Quecksilber, Selen und/oder Tellur, die im flüssigen Zustand eine genügend hohe elektrische Leitfähigkeit aufweisen. Ferner können Halbmetalle oder Metalle als negative Elektrode (Anode) fungieren, z.B. Magnesium, Kalium, Natrium, Lithium und/oder Kalzium, die im flüssigen Zustand eine genügend hohe elektrische Leitfähigkeit aufweisen. Der flüssige Elektrolyt separiert (unterbindet die Elektronenleitung und ermöglicht die Ionenleitung) dabei die im Betrieb flüssige Anode und die im Betrieb flüssige Kathode. Die drei im Betrieb flüssigen Materialien der Kathode, der Anode und des Elektrolyten können derart gewählt sein oder werden, dass die Dichte (Massedichte) des Elektrolyten größer als die des flüssigen Anodenmaterials und die Dichte des flüssigen Kathodenmaterials größer als die Dichte des Elektrolyten ist. Alternativ können die drei im Betrieb flüssigen Materialien der Kathode, der Anode und des Elektrolyten derart gewählt sein oder werden, dass die Dichte (Massedichte) des Elektrolyten größer als die des flüssigen Kathodenmaterials und dass die Dichte des flüssigen Anodenmaterials größer als die Dichte des Elektrolyten ist. Unter diesen Voraussetzungen kann eine natürliche Dichteschichtung der Materialien entstehen, im Schwerefeld der Erde, so dass beispielsweise die Notwendigkeit des Einsatzes eines porösen Diaphragmas entfällt.

Eine elektrochemische Zelle mit im Betrieb flüssigen Elektrodenmaterialien, welche von einem flüssigen Elektrolyten getrennt sind, kann eine hohe Stromdichte aufweisen, z.B. in einem Bereich bis ungefähr 50 kA/m². Dabei ist die Stromdichte auf die Fläche bezogen, welche sich aus der Grenzfläche der Schichtung der flüssigen Materialien ergibt, also beispielsweise aus der Kontaktfläche des Elektrolyten mit den Elektroden.

Eine elektrochemische Zelle mit im Betrieb flüssigen Elektrodenmaterialien, welche von einem flüssigen Elektrolyten getrennt sind, kann beispielsweise bis zu einer Größe von mehreren Kubikmetern skaliert werden, wobei eine Beschränkung aufgrund des realisierbaren maximalen Ladestroms und Entladestroms gegeben sein kann. Bei gegebener Stromdichte können der maximale Durchmesser und damit der Gesamtstrom in der elektrochemischen Zelle aufgrund des Einsetzens einer stromgetriebenen Instabilität in flüssigen Metallen limitiert sein. Diese Instabilität wird im Folgenden auch als Tayler-Instabilität bezeichnet. Ferner kann eine Strömung in den flüssigen Komponenten auch aus anderen Gründen induziert werden.

Die Tayler-Instabilität beschreibt oder wird verursacht durch die Wechselwirkung elektrischer Ströme mit ihren eigenen Magnetfeldern, welche beispielsweise zu einer Strömung in Flüssigmetallen führen kann, wenn sie (in Abhängigkeit von den konkreten Stoffparametern) einige Kiloampere überschreiten. Die Tayler-Instabilität, die auch unter der Bedingung eines perfekt homogenen Stromflusses auftritt, kann bei ausreichender Stärke zu einer Zerstörung der stabilen Schichtung von flüssigem anodischem, elektrolytischem und kathodischem Material und damit zu einem Kurzschluss in der elektrochemischen Zelle führen. Im Allgemeinen kann ein hoher konstruktiver Aufwand notwendig sein, um das Auftreten der Tayler-Instabilität in einer elektrochemischen Zelle mit im Betrieb flüssigen Komponenten zu verhindern, z.B. eine separierte Stromführung durch die elektrochemische Zelle selbst hindurch.

Gemäß verschiedenen Ausführungsformen kann die Energiespeicheranordnung eine elektrochemische Zelle aufweisen, in welcher die im Betrieb flüssige Anode oder das flüssige anodische Material, der im Betrieb flüssige Elektrolyt oder das flüssige elektrolytische Material und die im Betrieb flüssige Kathode oder das flüssige kathodische Material eine Schichtung oder Schichtstruktur bilden. Bei einer durch die elektrochemischen Prozesse vorgegebenen Stromdichte (in der Größenordnung von 10 kA/m²) gibt es für jede der drei Flüssigkeiten einen kritischen Durchmesser, bei dem die Tayler-Instabilität einsetzt. Dabei kann es auf Grund der durch die Tayler-Instabilität angetriebenen Strömung zu einem lokalen Aufbrechen der flüssigen Elektrolytschicht und damit zu einem Kurzschluss zwischen dem flüssigen Anodenmaterial und dem flüssigen Kathodenmaterial kommen. Der kritische Durchmesser der elektrochemischen Zelle bzw. der Schichtung wird dabei durch den kleinsten der kritischen Durchmesser der jeweils verwendeten im Betrieb flüssigen Materialien bestimmt.

Gemäß verschiedenen Ausführungsformen kann die elektrochemische Zelle bei Raumtemperatur feste Materialien aufweisen, also die Anode, die Kathode und der Elektrolyt können beispielsweise bei Raumtemperatur fest sein. In diesem Zustand ist die elektrochemische Zelle nicht funktionsfähig, da beispielsweise kein ausreichender Ionentransport durch den Elektrolyten erfolgen kann. Für den Betrieb der elektrochemischen Zelle kann diese eine Temperatur in einem Bereich von ungefähr 100°C bis ungefähr 700°C aufweisen, oder eine Temperatur von mehr als 700°C, so dass die Anode, die Kathode und der Elektrolyt flüssig werden bzw. flüssig sind. Aufgrund der unterschiedlichen Materialdichte kann sich eine Schichtung der Materialien von selbst einstellen, sobald diese flüssig sind.

Verschiedene Ausführungsformen beruhen beispielsweise auf der Erkenntnis, dass durch das Anlegen eines äußeren Magnetfeldes ausreichender Stärke an eine hierin beschriebene elektrochemische Zelle die Tayler-Instabilität unterdrückt werden kann. Dieses angelegte Magnetfeld kann sowohl mittels eines Systems von Permanentmagneten oder mittels eines geeigneten Spulensystems erzeugt werden. Dabei kann das Spulensystem beispielsweise zumindest von einem Teil des Ladestroms bzw. Entladestroms der Batterie (der elektrochemischen Zelle) durchflossen werden. Gemäß verschiedenen Ausführungsformen sind beispielsweise keine weiteren Maßnahmen zur Stabilisierung der elektrochemischen Zelle notwendig. Ferner kann die elektrochemische Zelle auf eine beliebige Größe skaliert werden, z.B. mit einer Grundfläche von mehreren Quadratmetern. Dies erlaubt höhere Gesamtströme in der elektrochemischen Zelle und eine signifikante Erhöhung der Energiespeicherkapazität der elektrochemischen Zelle und führt damit zu einer Kostenreduktion im Vergleich zu einer entsprechenden Anordnung aus vielen Zellen mit kleinen Durchmessern.

Ferner kann ein einfaches technisches Design der elektrochemischen Zelle verwendet werden, was beispielsweise zu einer Kostenersparnis führt und/oder beispielsweise eine Optimierung des Designs der elektrochemischen Zelle zulässt, ohne die Beschränkungen, die sich aus der Tayler-Instabilität ergeben würden. Die hierin beschriebene Energiespeicheranordnung kann die Tayler-Instabilität für beliebig große Batterien (elektrochemische Zellen) unterdrücken bzw. es können beliebig große Batterien stabilisiert werden.

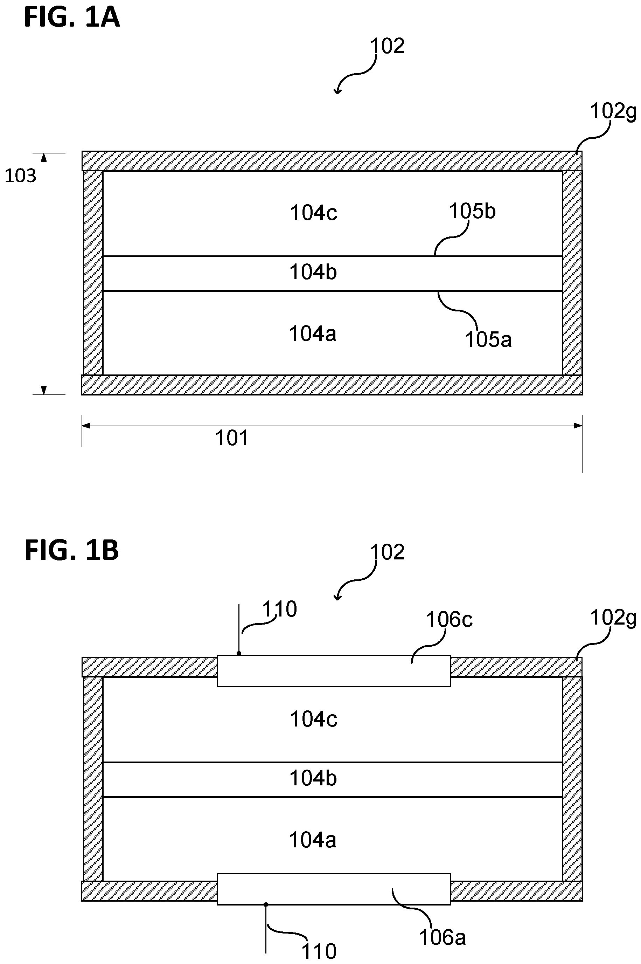

**Fig.1A** veranschaulicht eine elektrochemische Zelle 102 in einer schematischen Seitenansicht oder Querschnittsansicht. Die elektrochemische Zelle 102 kann beispielsweise eine erste Elektrode 104a und eine zweite Elektrode 104c aufweisen, wobei diese mittels eines Elektrolyten 104b räumlich voneinander getrennt sein können oder werden können.

Gemäß verschiedenen Ausführungsformen kann die erste Elektrode 104a mindestens ein Material aus der folgenden Gruppe von Materialien aufweisen: Aluminium, Zinn, Zink, Gallium, Selen, Tellur, Bismut, Quecksilber, Indium, Kadmium, Antimon und Thallium. Ferner kann die erste Elektrode 104a eine Verbindung oder Legierung aufweisen, wobei die Verbindung oder Legierung mindestens eines der genannten Materialien aufweisen kann. Ferner kann die erste Elektrode 104a, in Abhängigkeit des Ladezustands der elektrochemischen Zelle 102, ein Alkalimetall oder ein Erdalkalimetall aufweisen.

Die erste Elektrode 104a kann beim Laden (Ladevorgang) der elektrochemischen Zelle 102 als Anode fungieren und beim Entladen (Entladevorgang) der elektrochemischen Zelle 102 als Kathode. Ferner kann die erste Elektrode 104a die positive Elektrode sein.

Gemäß verschiedenen Ausführungsformen kann die zweite Elektrode 104c mindestens ein Material aus der folgenden Gruppe von Materialien aufweisen: Aluminium, Lithium, Natrium, Kalium, Kalzium, Cäsium, Rubidium, Barium und Magnesium.

Die zweite Elektrode 104c kann beim Laden (Ladevorgang) der elektrochemischen Zelle 102 als Kathode fungieren und beim Entladen (Entladevorgang) der elektrochemischen Zelle 102 als Anode. Ferner kann die zweite Elektrode 104c die negative Elektrode sein.

Ferner können die erste Elektrode 104a und die zweite Elektrode 104c jede Materialkombination aufweisen, welche eine elektrochemische Zelle 102 bereitstellen kann, also die entsprechenden elektrochemischen Eigenschaften aufweisen und in flüssiger Form eine Schichtung bilden, wie beispielsweise in Fig.1A veranschaulicht ist.

Der Elektrolyt 104b kann beispielsweise ein Salz aufweisen, z.B. ein Alkalisalz, ein Erdalkalisalz oder eine Mischung aus mehreren Salzen. Der Elektrolyt 104b kann beispielsweise ein Salz (z.B. ein Chlorid und/oder ein Fluorid) des jeweiligen Materials der zweiten Elektrode 104c aufweisen.

Gemäß verschiedenen Ausführungsformen kann die erste Elektrode Antimon aufweisen, die zweite Elektrode 104c Magnesium und der Elektrolyt kann eine Mischung aus den Salzen Magnesiumchlorid, Kaliumchlorid und Natriumchlorid aufweisen. Dabei weist die zweite Elektrode 104c (Mg) eine Schmelztemperatur von ungefähr 650°C auf und eine Dichte von ungefähr 1584 kg/m³, die erste Elektrode 104a (Mg/Sb) eine Schmelztemperatur von ungefähr 630°C und eine Dichte von ungefähr 6530 kg/m³, und der Elektrolyt 104b (MgCl₂/KCl/NaCl) eine Schmelztemperatur von ungefähr 400°C und eine Dichte von ungefähr 1670 kg/m³. Somit kann die elektrochemische Zelle 102 beispielsweise auf eine Temperatur von mehr als ungefähr 650°C erwärmt werden, damit die Elektroden 104a, 104c und der Elektrolyt 104b flüssig werden. Bei einer Temperatur von mehr als ungefähr 650°C ist diese elektrochemische Zelle 102 betriebsbereit; und weist aufgrund der Materialdichten die entsprechende Schichtung auf, wie hierin beschrieben.

Wie in Fig.1A veranschaulicht ist, kann die Schichtung der Elektroden 104a, 104c und des Elektrolyten 104b zwei Grenzflächen 105a, 105b jeweils zwischen den aneinander angrenzenden (flüssigen) Schichten aufweisen. Die Lage der Grenzflächen 105a, 105b relativ zu dem Gehäuse 102g kann unabhängig von der Ausrichtung (Lage) des Gehäuses 102g sein, und beispielsweise durch die wirkende Gravitationskraft bestimmt sein. Das Gehäuse 102g kann beispielsweise beim Betreiben der elektrochemischen Zelle 102 wie dargestellt ausgerichtet sein.

Beim Entladen der elektrochemischen Zelle 102 kann das Magnesium beispielsweise zwei Elektronen abgeben und als Kation Mg²⁺ durch den Elektrolyten 104b hindurch, der als Ionenleiter fungiert, zu der ersten Elektrode 104a bewegen und in dem Material der ersten Elektrode 104a aufgenommen werden. Dabei kann die erste Elektrode 104a eine Legierung bilden aus dem ursprünglichen Material der ersten Elektrode 104a und dem aufgenommenen Material von der zweite Elektrode 104c. Die an der zweiten Elektrode 104c frei werdenden Elektronen stehen in ihrer Summe dann als nutzbarer elektrischer Strom zur Verfügung.

In analoger Weise können andere Materialien und/oder Materialkombinationen eingesetzt werden, zum Betreiben der elektrochemischen Zelle 102.

Gemäß verschiedenen Ausführungsformen kann die elektrochemische Zelle 102 (und somit auch ungefähr die Elektroden 104a, 104c und der Elektrolyt 104b) eine Breite 101 (oder Durchmesser 101) in einem Bereich von ungefähr mehreren Zentimetern bis ungefähr einigen Metern aufweisen, z.B. in einem Bereich von ungefähr 10 cm bis ungefähr 5 m. Ferner kann die elektrochemische Zelle 102 (und somit auch ungefähr die Elektroden 104a, 104c und der Elektrolyt 104b) eine Breite 101 (oder Durchmesser 101) von mehr als 5 m aufweisen. Ferner kann die elektrochemische Zelle 102 eine Höhe 103 in einem Bereich von ungefähr mehreren Zentimetern bis ungefähr einigen Metern aufweisen, z.B. in einem Bereich von ungefähr 5 cm bis ungefähr 5 m. Ferner kann die elektrochemische Zelle 102 eine Höhe 103 von mehr als 5 m aufweisen. Ferner kann die elektrochemische Zelle 102 ein Volumen (z.B. Innenvolumen zum Aufnehmen der Elektroden und des Elektrolyten) in einem Bereich von ungefähr 5 m³ bis ungefähr 100 m³ aufweisen, oder ein Volumen von mehr als ungefähr 100 m³.

Ferner kann die elektrochemische Zelle 102 ein Gehäuse 102g aufweisen, welches die Elektroden und den Elektrolyten aufnimmt. Das Gehäuse 102g kann zumindest teilweise derart elektrisch isoliert sein oder ein elektrisch isolierendes Material aufweisen, dass die Elektroden 104a, 104c nicht miteinander elektrisch kurzgeschlossen sind. Ferner kann mindestens eine Wand oder ein Teil des Gehäuses 102g beweglich eingerichtet sein, so dass eine Volumenänderung der Materialien der Elektroden 104a, 104c oder des Materials des Elektrolyten 104b kompensiert werden kann.

Wie in **Fig.1B** dargestellt ist, kann die elektrochemische Zelle 102 zumindest zwei elektrische Kontakte (oder Kontaktstrukturen) 106a, 106c aufweisen, zum Bereitstellen eines elektrischen Stromkreises 110, welcher z.B. die erste Elektrode 104a und die zweite Elektrode 104c elektrisch leitfähig miteinander verbindet. Die elektrochemische Zelle 102 kann mittels der elektrischen Kontakte 106a, 106c über dem Stromkreis 110 geladen oder entladen werden. Die elektrischen Kontakte 106a, 106c können sich teilweise in das Innere des Gehäuses 102g erstrecken, z.B. teilweise in die jeweilige im Betrieb flüssige Elektrode 104a, 104c hinein, so dass die elektrischen Kontakte 106a, 106c mit den Elektroden 104a, 104c elektrisch leitend in Kontakt sind.

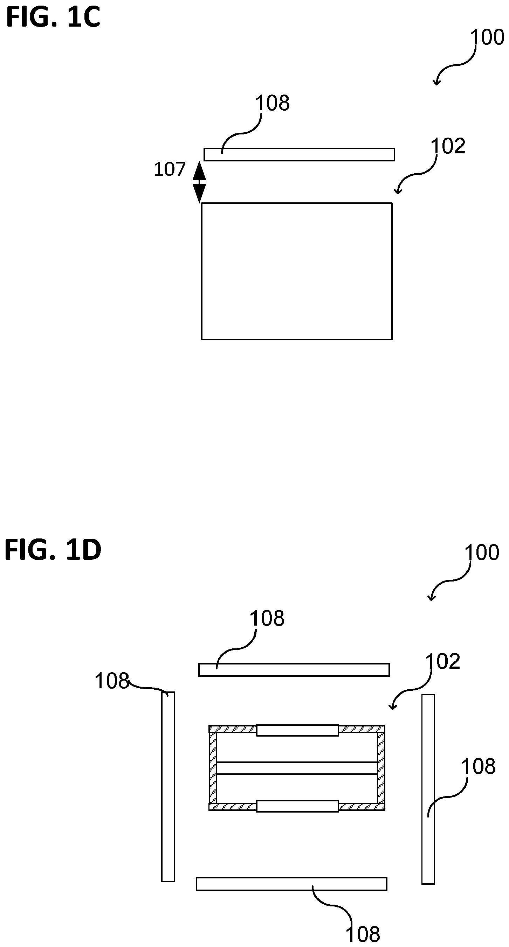

**Fig.1C** veranschaulicht eine Energiespeicheranordnung 100 in einer schematischen Seitenansicht oder Querschnittsansicht, wobei die Energiespeicheranordnung 100 zumindest eine elektrochemische Zelle 102 aufweisen kann, wie vorangehend beschrieben, und ferner eine außerhalb der elektrochemischen Zelle 102 angeordnete Magnetfelderzeugungsstruktur 108 zum Erzeugen eines Magnetfeldes, wobei die Magnetfelderzeugungsstruktur derart eingerichtet ist, dass das erzeugte Magnetfeld die mindestens eine elektrochemische Zelle durchdringt, beispielsweise so dass die Schichtung aus den Elektroden 104a, 104c und dem Elektrolyten 104b innerhalb der elektrochemischen Zelle 102 stabilisiert wird, wie hierin beschrieben.

Die Magnetfelderzeugungsstruktur 108 kann beispielsweise in einem Abstand 107 zu der elektrochemischen Zelle 102 angeordnet sein. Ferner kann die Magnetfelderzeugungsstruktur 108 relativ zu der elektrochemischen Zelle 102 derart angeordnet und eingerichtet sein, dass das Magnetfeld, welches innerhalb der elektrochemischen Zelle 102 mittels der Magnetfelderzeugungsstruktur 108 erzeugt wird, groß genug ist, die elektrochemische Zelle 102 zu stabilisieren. Dabei kann innerhalb der elektrochemischen Zelle 102 ein Magnetfeld mit einer magnetischen Flussdichte in einem Bereich von einigen mT bis zu einigen hundert mT bereitgestellt sein oder werden, z.B. ein Magnetfeld mit einer magnetischen Flussdichte in einem Bereich von ungefähr 1 mT bis ungefähr 800 mT.

Das Gehäuse 102g der elektrochemischen Zelle 102 kann beispielsweise die Form eines einfachen Quaders, Prismas oder Zylinders aufweisen, z.B. kein Hohlkörper sein, oder die Form eines anderen beliebigen aber konvexen Körpers aufweisen. Gemäß verschiedenen Ausführungsformen kann die Magnetfelderzeugungsstruktur 108 in das Gehäuse 102g der elektrochemischen Zelle 102 integriert sein oder teilweise in das Gehäuse 102g der elektrochemischen Zelle 102 integriert sein.

Gemäß verschiedenen Ausführungsformen kann die elektrochemische Zelle 102 oder das Gehäuse 102g der elektrochemischen Zelle 102 eine beliebige Form aufweisen, wobei die Magnetfelderzeugungsstruktur 108 außerhalb der elektrochemischen Zelle 102 angeordnet sein kann, beispielsweise in einem Abstand 107 zu mindestens einer Elektrode 104a, 104c oder mindestens einem elektrischen Kontakt 106a, 106c der elektrochemischen Zelle 102. Gemäß verschiedenen Ausführungsformen kann die Magnetfelderzeugungsstruktur 108 derart eingerichtet sein, dass diese nicht durch die elektrochemische Zelle 102 hindurch verläuft.

Wie in **Fig.1D** dargestellt ist, kann die elektrochemische Zelle 102 von mehreren Magnetfelderzeugungsstrukturen 108 umgeben sein, oder die Magnetfelderzeugungsstruktur 108 kann mehrere Komponenten aufweisen, welche die elektrochemische Zelle 102 umgeben können oder teilweise umgeben können.

Gemäß verschiedenen Ausführungsformen kann die Magnetfelderzeugungsstruktur 108 an ein Steuersystem oder Regelsystem gekoppelt sein, und beispielsweise mittels des Steuersystem oder Regelsystem derart angesteuert oder geregelt werden, dass die elektrochemische Zelle 102 stabilisiert wird bzw. dass die Schichtung der flüssigen Komponenten der elektrochemische Zelle 102 stabilisiert wird. Dabei kann das erzeugte Magnetfeld mittels des Spulenstroms durch die eine Spule oder die mehreren Spulen hindurch gesteuert und/oder geregelt werden. Ferner kann die Energiespeicheranordnung 100 einen oder mehrere Sensoren aufweisen, beispielsweise Magnetfeldsensoren (Hall-Sensoren) oder Strommessgeräte, zum Regeln und/oder Überwachen des erzeugten Magnetfeldes. Ferner kann die Energiespeicheranordnung 100 auch einen oder mehrere Dauermagneten (Permanentmagneten) als Magnetfelderzeugungsstruktur 108 aufweisen, beispielsweise Hartferrit-Magnete, Neodym-Eisen-Bor-Magnete, oder ähnliche Magnete.

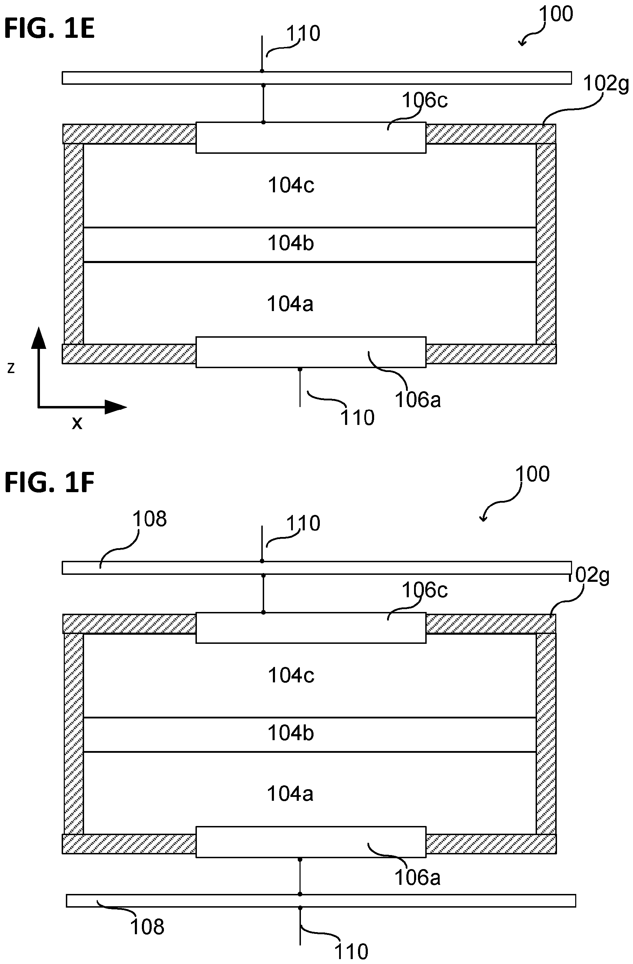

Ferner kann die Magnetfelderzeugungsstruktur 108 der Energiespeicheranordnung 100, wie in **Fig.1E** dargestellt ist, mindestens eine elektromagnetische Spule 108 aufweisen, z.B. mit mindestens einer Windung oder mit mindestens einer Leiterschleife, wobei die elektromagnetische Spule 108 mit dem Stromkreis 110 zum Laden und/oder Entladen der Energiespeicheranordnung 100 gekoppelt sein kann. Dabei kann beispielsweise der Ladestrom oder der Entladestrom, welcher der elektrochemischen Zelle 102 über den Stromkreis 110 zugeführt oder aus der elektrochemischen Zelle 102 abgeführt wird, durch die mindestens eine elektromagnetische Spule 108 hindurch fließen (oder zumindest teilweise durch die mindestens eine elektromagnetische Spule 108 hindurch fließen), so dass mittels des Ladestroms oder Entladestroms, welcher durch die mindestens eine elektromagnetische Spule 108 hindurch fließt, ein Magnetfeld erzeugt wird, welches die elektrochemische Zelle 102 von außen durchdringt. In diesem Fall stabilisiert sich die Energiespeicheranordnung 100 selbst, da bei größerem Ladestrom oder Entladestrom auch das mittels der Magnetfelderzeugungsstruktur 108 erzeugte Magnetfeld größer wird, und in dem Fall, dass die elektrochemische Zelle 102 nicht geladen oder entladen wird, treten keine elektrischen Verluste auf.

Alternativ kann die mindestens eine elektromagnetische Spule 108 dauerhaft von einem konstanten Strom durchflossen werden, so dass ein ausreichend großes Magnetfeld erzeugt wird, um die elektrochemische Zelle 102 zu stabilisieren.

Wie in **Fig.1F** in einer weiteren schematischen Querschnittsansicht oder Seitenansicht dargestellt ist, kann die Magnetfelderzeugungsstruktur 108 der Energiespeicheranordnung 100 mehrere elektromagnetische Spulen 108 aufweisen. Die elektrochemische Zelle 102 kann beispielsweise zwischen zwei elektromagnetischen Spulen 108 angeordnet sein, wobei die elektromagnetischen Spulen 108 beispielsweise, wie vorangehend beschrieben, mit dem Stromkreis 110 derart gekoppelt sein können, dass der Ladestrom oder Entladestrom der elektrochemischen Zelle 102 gleichzeitig auch mittels der elektromagnetischen Spulen 108 ein entsprechendes Magnetfeld zum Stabilisieren der elektrochemischen Zelle 102 erzeugt (z.B. ein Magnetfeld mit einer magnetischen Flussdichte von bis zu einem Tesla).

Die elektromagnetische Spule 108 kann beispielsweise Kupfer aufweisen, oder ein anderes Material mit hoher elektrischer Leitfähigkeit, so dass die Leitungsverluste minimal sein können. Ferner kann die elektromagnetische Spule 108 eine Leiterschleife aufweisen, wobei der Leiter einen entsprechend großen Querschnitt aufweisen kann, so dass die Leitungsverluste minimal sein können. Ferner kann die elektromagnetische Spule 108 eine Vielzahl von Windungen aufweisen, z.B. 2 bis 100 Windungen oder mehr als 100 Windungen.

Der Durchmesser der Magnetfelderzeugungsstruktur 108 (der einen Spule, der mehreren Spulen, des einen oder der Permanentmagneten) kann beispielsweise größer als die Breite 101 (oder der Durchmesser 101) der elektrochemischen Zelle 102 sein.

Im Folgenden werden verschiedene Modifikationen und Konfigurationen der Energiespeicheranordnung 100 und Details zu der elektrochemischen Zelle 102 und der Magnetfelderzeugungsstruktur 108 beschrieben, wobei sich die bezüglich der Figuren 1A bis 1F beschriebenen grundlegenden Merkmale und Funktionsweisen analog einbeziehen lassen. Ferner können die nachfolgend beschriebenen Merkmale und Funktionsweisen analog auf die in den Figuren 1A bis 1F beschriebene Energiespeicheranordnung 100 übertragen werden oder mit der in den Figuren 1A bis 1F beschriebenen Energiespeicheranordnung 100 kombiniert werden.

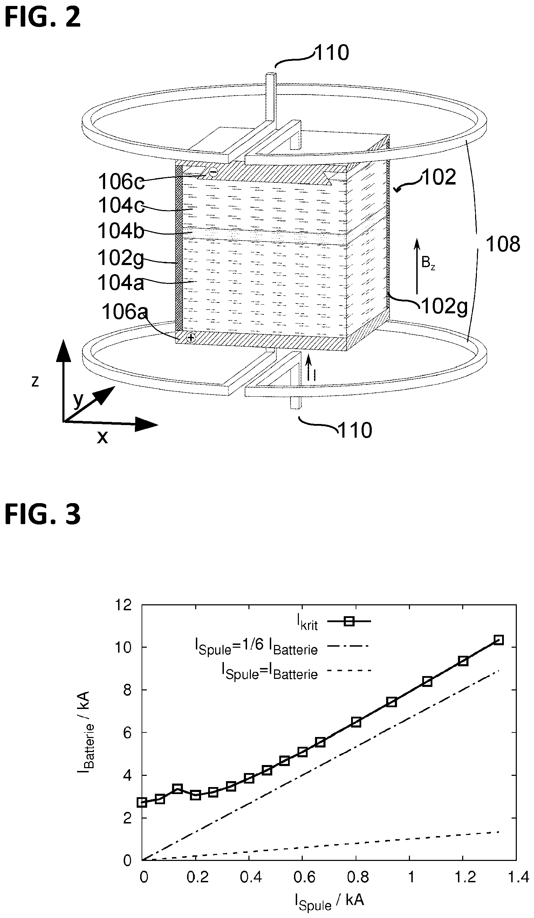

In **Fig.2** ist eine Energiespeicheranordnung 100 in einer schematischen Ansicht dargestellt, wobei die Energiespeicheranordnung 100 Folgendes aufweist: mindestens eine elektrochemische Zelle 102, wobei die mindestens eine elektrochemische Zelle 102 eine im Betrieb flüssige erste Elektrode 104a, einen im Betrieb flüssigen Elektrolyten 104b und eine im Betrieb flüssige zweite Elektrode 104c aufweist. Die im Betrieb flüssige erste Elektrode 104a, der im Betrieb flüssige Elektrolyt 104b und die im Betrieb flüssige zweite Elektrode 104c bilden jeweils die Anode und die Kathode einer wiederaufladbaren Batterie (Akkumulator), wobei die Anode und die Kathode von dem Elektrolyten getrennt sind. Ferner weist die Energiespeicheranordnung 100 eine außerhalb des Außenumfangs der mindestens einen elektrochemischen Zelle 102 angeordnete Magnetfelderzeugungsstruktur 108 zum Erzeugen eines Magnetfeldes auf, wobei die Magnetfelderzeugungsstruktur 108 derart eingerichtet ist, dass das erzeugte Magnetfeld B die mindestens eine elektrochemische Zelle 102 durch den Außenumfang der mindestens einen elektrochemischen Zelle 102 durchdringt. Ferner kann die elektrochemische Zelle 102 der Energiespeicheranordnung 100 einen ersten Kontakt 106a und einen zweiten Kontakt 106c aufweisen, welche jeweils elektrisch leitend mit der ersten Elektrode 104a und der zweiten Elektrode 104c verbunden sind.

Die Energiespeicheranordnung 100 kann während des Betriebs mittels des Ladestroms und/oder des Entladestroms geheizt werden, so dass die Komponenten 104a, 104b, 104c flüssig werden oder flüssig bleiben.

Wie in Fig.2 veranschaulicht ist, kann der Ladestrom und/oder der Entladestrom I durch eine erste Windung (Spule) 108 hindurch, in die elektrochemische Zelle 102 hinein und durch eine zweite Windung (Spule) 108 hindurch aus der elektrochemischen Zelle 102 heraus fließen. Die Spulen 108 der Magnetfelderzeugungsstruktur 108 können analog zu einer Helmholtz-Spulen-Konfiguration eingerichtet sein oder werden. Anschaulich sind die Spulen der Magnetfelderzeugungsstruktur 108 in Reihe mit der elektrochemischen Zelle 102 geschaltet. Mittels der Magnetfelderzeugungsstruktur 108 kann ein Magnetfeld B erzeugt werden, welches die elektrochemische Zelle 102 durchdringt, wobei das Magnetfeld mindestens eine z-Komponente B_{z} aufweisen kann, welche senkrecht zu den Grenzflächen 105a, 105b steht, wobei sich die Grenzflächen 105a, 105b aus der Schichtung der flüssigen Komponenten 104a, 104b, 104c ergeben. Mit anderen Worten kann das mittels der Magnetfelderzeugungsstruktur 108 erzeugte Magnetfeld B zumindest eine Magnetfeldkomponente B_{z} aufweisen, welche parallel zum Normalen-Vektor der Grenzflächen 105a, 105b gerichtet ist.

Gemäß verschiedenen Ausführungsformen kann die elektrochemische Zelle 102 seitlich von einem Gehäuse 102g begrenzt werden, welches zumindest im Inneren elektrisch nichtleitend ist, so dass die Elektroden 104a, 104c nicht kurzgeschlossen werden. Ferner kann die elektrochemische Zelle 102 nach oben und unten von den Kontakten oder Kontaktstrukturen 106a, 106c begrenzt sein oder werden.

Ferner können die Kontakte oder Kontaktstrukturen 106a, 106c der elektrochemischen Zelle 102 jeweils einen festen elektrischen Leiter aufweisen, welcher jeweils im Kontakt mit dem flüssigen Elektrodenmaterial steht.

Wie in Fig.2 dargestellt ist, kann Energie in der Energiespeicheranordnung 100 gespeichert werden, indem am negativen Pol die Metall-Ionen zu einem flüssigen Metall reduziert werden, und am positiven Pol Metall-Atome zu Ionen oxidiert werden. Dabei dient die Spule 108 dazu, das Auftreten der Tayler-Instabilität und damit die gegenseitige Durchmischung der Materialien, aus denen Kathode, Elektrolyt und Anode bestehen, zu verhindern. Dazu genügt es beispielsweise, jeweils eine Wicklung zu verwenden und durch diese den Lade- bzw. Entladestrom der Batterie, bzw. einen Teil des Lade- bzw. Entladestroms, zu schicken.

**Fig.3** zeigt für die in Fig.2 dargestellte Energiespeicheranordnung 100 und die konkret gewählte Form einer Helmholtzspule 108 die Abhängigkeit des für das Einsetzen der Tayler-Instabilität kritischen Stroms im Fluid von einem zunächst als unabhängig und variabel angenommenen Strom durch die Spule. Dabei wird Natrium als Kathodenmaterial angenommen, welches aufgrund seiner physikalisch-chemischen Eigenschaften (Leitfähigkeit σ = 5,99 x 10⁶ S/m, Dichte ρ = 0,878 x 10³ kg/m³, Viskosität η = 3,94 x 10⁻⁷ m²/s, jeweils bei einer Temperatur von 300°C) und seines niedrigen Preises ein geeignetes Anoden-Material sein kann. Zum Zweck der Illustration wird von einer würfelförmigen Batterie (elektrochemische Zelle 102) mit der Kantenlänge 1 m ausgegangen, wobei die Höhe der oberen flüssigen Natriumschicht als 50 cm angenommen wird. Die diesen Würfel 102 umschließende Helmholtzspule 108 hat einen Durchmesser von 240 cm und einen Abstand der beiden Teilspulen von 120 cm. Setzt man den Strom in der Helmholtzspule 108 demjenigen in der Batterie gleich (I_{Spule} = I_{Batterie}), so erkennt man, dass der in der Helmholtzspule 108 fließende Strom die Tayler-Instabilität für alle betrachteten Stromstärken sicher unterdrückt. Eine Erhöhung der Windungszahl der Spule ist nicht notwendig aber optional oder für eine andere Geometrie möglich.

Die geringe Windungszahl der Spule 108 kann eine große Empfindlichkeit gegenüber den geometrischen Details der Spulenzuleitungen mit sich bringen. Wie in Fig.2 veranschaulicht ist, können die Zuleitungen zu der Spule möglichst parallel und sehr eng zu einander eingerichtet und/oder angeordnet sein oder werden, um Feldinhomogenitäten gering zu halten oder zu vermeiden.

In Fig.3 ist eine weitere Kurve veranschaulicht, (I_{Spule} = I_{Batterie} / 6), wobei der durch die Helmholtz-Spule fließende Strom nur ein Sechstel des Ladestroms bzw. Entladestroms der Batterie 102 beträgt. Gemäß verschiedenen Ausführungsformen kann dieser Strom ausreichen, um die Tayler-Instabilität zu unterdrücken. Somit kann der Spannungsabfall an der Spule reduziert werden, indem nur ein Teil des Ladestroms bzw. Entladestroms der Batterie 102 durch die Spulen-Anordnung 108 fließt.

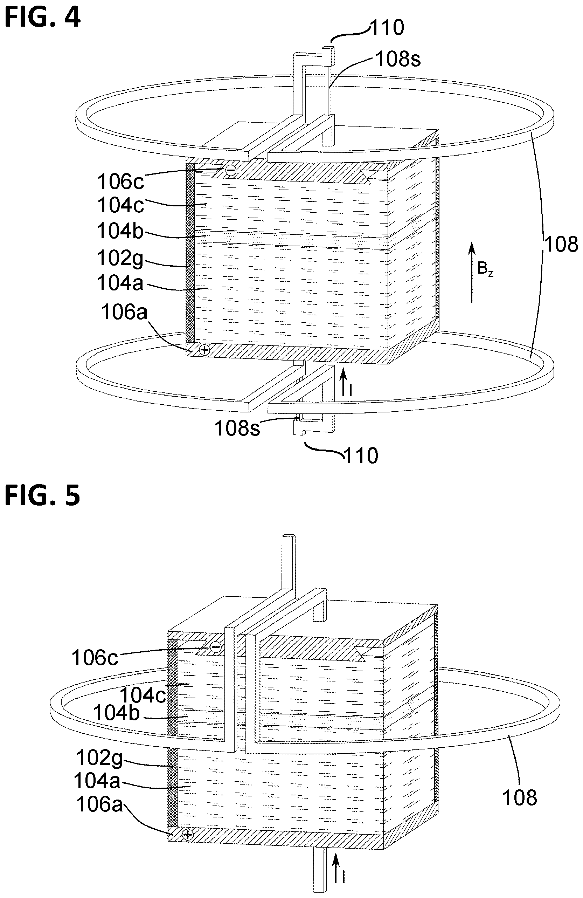

In **Fig.4** ist eine Energiespeicheranordnung 100 in einer schematischen Ansicht dargestellt, wobei die Energiespeicheranordnung 100 einen Stromteiler 108s bzw. mehrere Stromteiler 108s aufweist, so dass die Spulen-Anordnung 108 (z.B. eine Helmholtz-Spule) mit einem geringeren Strom betrieben werden kann, als zum Laden oder Entladen durch die oder in der elektrochemische Zelle 102 fließt. Dabei wird ein Teil des Stroms durch eine Stromabzweigung 108s geleitet. Für den Fall, dass beispielsweise der Strom in der Helmholtz-Spule 108 nur ein Sechstel des Batteriestroms betragen soll, muss das Verhältnis des Widerstandes in der Stromabzweigung 108s zum Widerstand in der Helmholtz-Spule 108 (der Windung) ein Fünftel betragen.

Gemäß verschiedenen Ausführungsformen kann die Magnetfelderzeugungsstruktur 108 relativ zu der elektrochemischen Zelle 102 derart angeordnet (z.B. Position und Lage) und eingerichtet sein, dass innerhalb der elektrochemischen Zelle 102 ein Magnetfeld erzeugt wird, welches im Wesentlichen parallel zur Stromflussrichtung innerhalb der elektrochemischen Zelle 102 gerichtet ist (nicht erfindungsgemäß).

In analoger Weise kann, wie in **Fig.5** dargestellt ist, die Magnetfelderzeugungsstruktur 108 in Form einer einzelnen Spule 108 bereitgestellt sein, wobei die einzelne Spule 108 die elektrochemische Zelle 102 umgibt, z.B. kann die einzelne Spule 108 in einer Höhe angebracht sein oder werden, welche in etwa der halben Höhe der Batterie entspricht, wie in Fig.5 veranschaulicht ist.

Gemäß verschiedenen Ausführungsformen kann die Energiespeicheranordnung 100 mit einem externen Stromkreis 110 verbunden sein oder werden zum Speichern elektrischer Energie, wobei an der Kathode die Metall-Ionen zu einem flüssigen Metall reduziert werden, und an der Anode die Metall-Ionen zu einem flüssigen Metall reduziert werden.

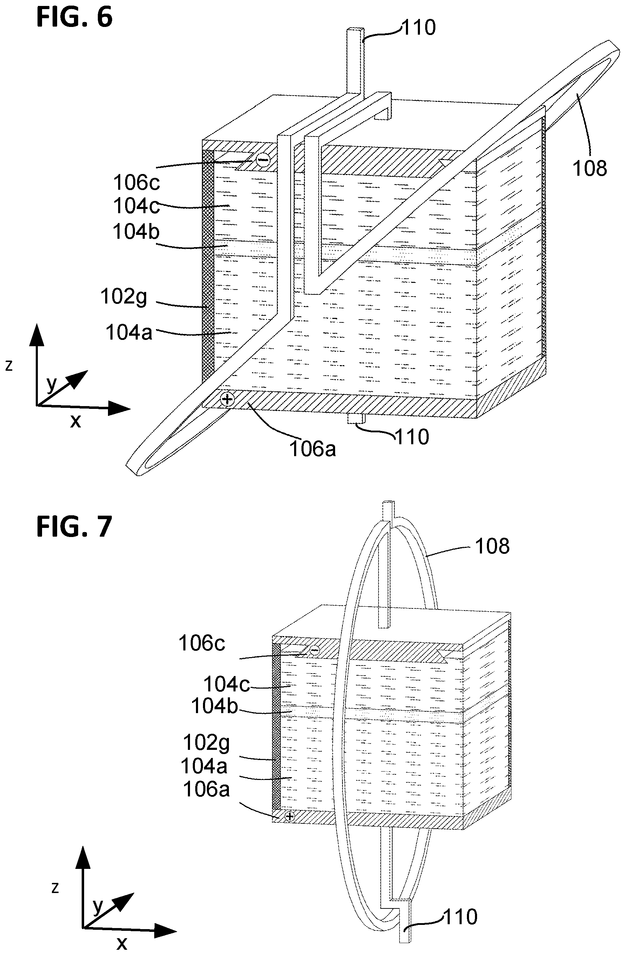

Wie in **Fig.6** und **Fig.7** veranschaulicht ist, kann die Magnetfelderzeugungsstruktur 108 zumindest eine Spule aufweisen, welche in einem Winkel (oder quer) zu der Schichtung (den Grenzflächen 105a, 105b) angeordnet sein kann, z.B. in einem Winkelbereich von ungefähr 0° (wie vorangehend beschrieben) bis ungefähr 45° (wie in Fig.6 dargestellt) oder bis ungefähr 90° (wie in Fig.7 dargestellt).

Die Spule 108, wie in Fig.6 veranschaulicht, erzeugt beispielsweise ein Magnetfeld mit einer z-Komponente, wie vorangehend beschrieben, und einer x-y-Komponente (z.B. einer radialen Komponente). Die x-y-Komponente liegt in der gleichen Ebene wie die Grenzflächen 105a, 105b der Schichtung der elektrochemischen Zelle 102.

Die Spule 108, wie in Fig.7 veranschaulicht ist, erzeugt beispielsweise ein Magnetfeld mit einer x-y-Komponente (z.B. einer radialen Komponente). Die x-y-Komponente liegt dabei in der gleichen Ebene wie die Grenzflächen 105a, 105b der Schichtung der elektrochemischen Zelle 102. Gemäß verschiedenen Ausführungsformen kann eine radiale Magnetfeldkomponente mittels der Magnetfelderzeugungsstruktur 108 von außerhalb der elektrochemischen Zelle 102 erzeugt werden.

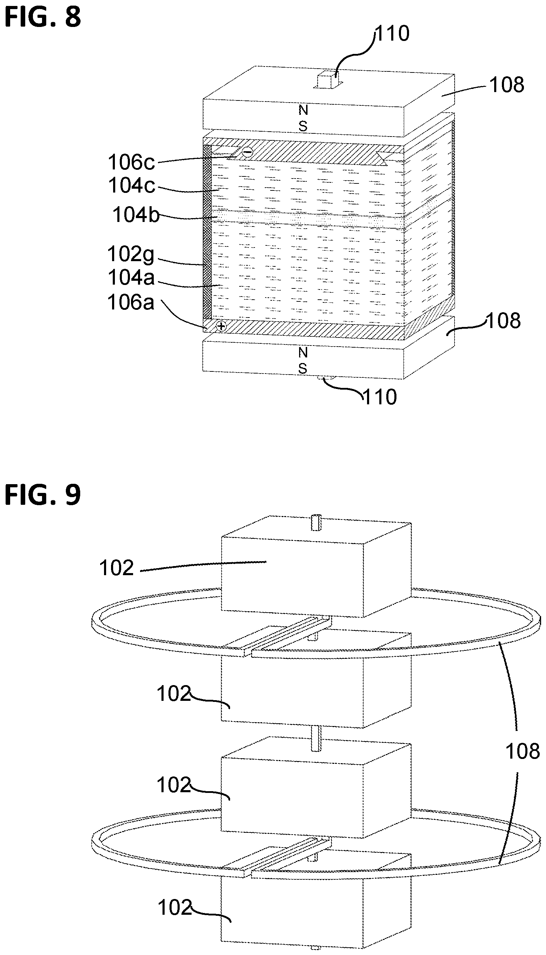

In **Fig.8** ist eine Energiespeicheranordnung 100 in einer schematischen Ansicht veranschaulicht, wobei die elektrochemische Zelle 102 mittels zweier Permanentmagneten 108 stabilisiert wird. Die elektrochemische Zelle 102 kann beispielsweise zwischen den Permanentmagneten 108 angeordnet sein, so dass das Magnetfeld der Permanentmagneten 108 die Zelle durchdringt. Wie vorangehend beschrieben kann dabei das bereitgestellte Magnetfeld eine z-Komponente aufweisen. Alternativ können die Permanentmagnete (ein Magnet oder mehrere Magnete) relativ zu der elektrochemischen Zelle 102 derart angeordnet sein, dass das Magnetfeld eine radiale Komponente aufweist.

Gemäß verschiedenen Ausführungsformen kann der Permanentmagnet 108 aus einer Vielzahl von kleineren Permanentmagneten bestehen oder eine Vielzahl von kleineren Permanentmagneten aufweisen. Mit anderen Worten kann die Magnetfelderzeugungsstruktur 108 eine Anordnung einer Vielzahl von Permanentmagneten aufweisen.

Wie in **Fig.9** in einer schematischen Ansicht veranschaulicht ist, kann eine Energiespeicheranordnung 100 mehrere elektrochemische Zellen 102 aufweisen und/oder mehrere Magnetfelderzeugungsstrukturen 108. Gemäß verschiedenen Ausführungsformen kann die Energiespeicheranordnung 100 mit mehreren elektrochemische Zellen 102 als eine Energiespeicherzellenanordnung bezeichnet sein oder werden. Dabei können mehrere elektrochemische Zellen 102 in Reihe und/oder parallel geschalten sein oder werden, so dass die Energiespeicherzellenanordnung entsprechend in der Spannung und in den Strömen variiert werden kann oder angepasst sein kann.

Ferner kann eine Magnetfelderzeugungsstruktur 108 relativ zu mehreren elektrochemischen Zellen 102 derart angeordnet sein, dass die mehreren elektrochemischen Zellen 102 stabilisiert werden, so dass die mehreren elektrochemischen Zellen 102 beispielsweise mit sehr hohen Strömen, z.B. in einem Bereich von ungefähr 1 kA bis ungefähr 1 MA, geladen oder entladen werden können.

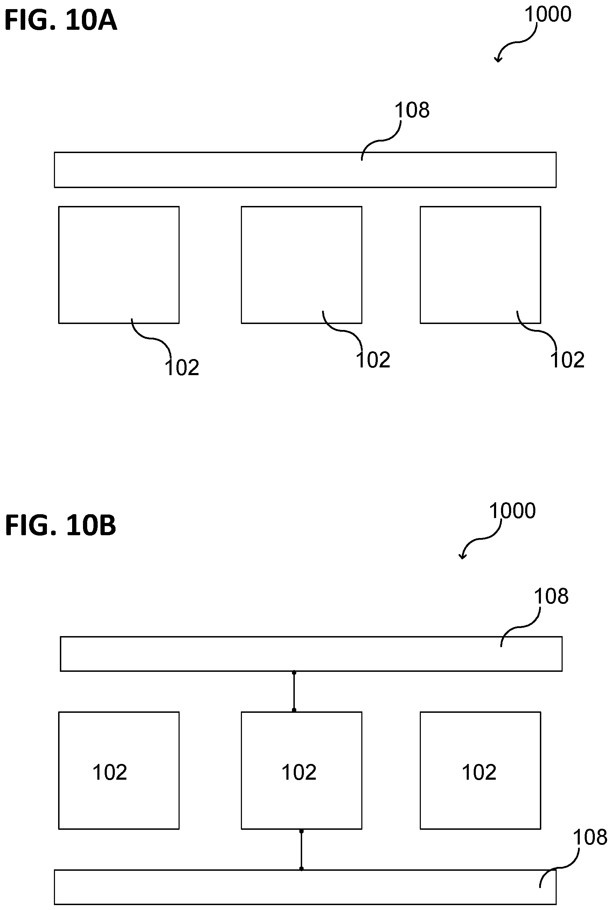

Wie in **Fig.10A** dargestellt ist, kann eine Magnetfelderzeugungsstruktur 108 relativ zu mehreren elektrochemischen Zellen 102 angeordnet und eingerichtet sein, so dass die Magnetfelderzeugungsstruktur 108 gleichzeitig mehrere elektrochemische Zellen 102 stabilisiert, also dass das mittels der Magnetfelderzeugungsstruktur 108 erzeugte Magnetfeld die mehreren elektrochemischen Zellen 102 von außen durchdringt.

Ferner kann, in analoger Weise wie vorangehend beschrieben, die Magnetfelderzeugungsstruktur 108 eine oder mehrere Spulen aufweisen, wobei die eine Spule oder die mehrere Spulen beispielsweise oberhalb und/oder unterhalb der mehreren elektrochemischen Zellen 102 angeordnet sein können.

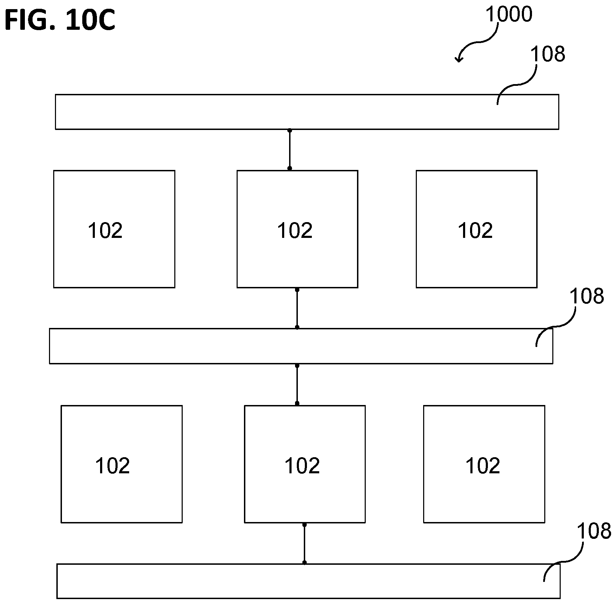

Dabei kann eine Spulen-Anordnung 108, wie beispielsweise in **Fig.10B** veranschaulicht ist, (z.B. eine Helmholtz-Spulen-Anordnung oder eine Helmholtz-Spule) mit einer elektrochemischen Zelle 102 elektrisch leitend verbunden sein, wie vorangehend beschrieben, wobei die Spulen-Anordnung 108 derart eingerichtet ist, dass diese ein Magnetfeld bereitstellt, welches die mehreren elektrochemischen Zellen 102 stabilisiert. Gemäß verschiedenen Ausführungsformen kann eine Energiespeicherzellenanordnung mehrere elektrochemische Zellen 102 und mehrere elektromagnetische Spulen aufweisen, z.B. in einer ähnlichen Anordnung wie eine Helmholtz-Spulen-Anordnung, wie beispielsweise in **Fig.10C** dargestellt ist.

Wie in den Figuren 10A bis 10C veranschaulicht ist, kann eine Anordnung von mehreren elektrochemischen Zellen 102 beispielsweise aufweisen: mehrere nebeneinander angeordnete elektrochemische Zellen 102, mehrere in einer Ebene angeordnete elektrochemische Zellen 102, mehrere übereinander angeordnete elektrochemische Zellen 102, mehrere nebeneinander und übereinander angeordnete elektrochemische Zellen 102, oder eine beliebige Anordnung elektrochemischer Zellen 102. Dabei kann eine Magnetfelderzeugungsstruktur 108 außerhalb der Anordnung elektrochemischer Zellen 102 (Zellenanordnung) derart angeordnet und/oder eingerichtet sein, ein Magnetfeld bereitzustellen, welches alle elektrochemischen Zellen 102 der Zellenanordnung durchdringt oder durchringen kann.

Ferner kann die Magnetfelderzeugungsstruktur 108 auch teilweise zwischen den mehreren elektrochemischen Zellen 102 der Zellenanordnung angeordnet sein, z.B. zwischen zwei benachbarten elektrochemischen Zellen 102 der Zellenanordnung.

Die in den Figuren 10A bis 10C veranschaulichte Energiespeicherzellenanordnung 1000 kann eine Zellenanordnung mit mehreren elektrochemischen Zellen 102 und eine Magnetfelderzeugungsstruktur 108 aufweisen, wobei die mehreren elektrochemischen Zellen 102 und die Magnetfelderzeugungsstruktur 108 entsprechend den hierin beschriebenen Funktionsweisen beliebig relativ zueinander angeordnet sein können oder eingerichtet sein können, so dass die Energiespeicherzellenanordnung 1000 in deren Funktionsweise nicht von der Tayler-Instabilität beeinflusst wird.

Gemäß verschiedenen Ausführungsformen wird eine Anordnung zur Speicherung elektrischer Energie (eine Energiespeicheranordnung 100) bereitgestellt, wobei diese mindestens eine elektrochemische Zelle 102 aufweist und die elektrische Energie in der mindestens einen elektrochemischen Zelle 102 gespeichert wird. Dabei kann die Energiespeicheranordnung 100 aufweisen: eine Schichtung eines die Anode bildenden flüssigen Metalls oder einer flüssigen Metalllegierung, eines flüssigen Elektrolyten und eines die Kathode bildenden flüssigen Metalls oder Halbmetalls oder einer flüssigen Metalllegierung oder Halbmetalllegierung, und ein System von Permanentmagneten und/oder ein Spulensystem mit mindestens einer Einzelspule, welches ein die elektrochemische Zelle durchdringendes Magnetfeld erzeugen kann.

Ferner kann das Spulensystem aus zwei Einzelspulen bestehen, die ein der Konfiguration der Helmholtz-Spule ähnliches Spulenpaar bilden, welches in der elektrochemischen Zelle 102 ein weitgehend homogenes vertikales Magnetfeld erzeugt.

Ferner kann das Spulenpaar aus jeweils einer Windung bestehen, durch welche der Ladestrom bzw. der Entladestrom der elektrochemischen Zelle 102 (der Batterie) geleitet werden kann.

Ferner können die Zuleitungen für die Spulen (z.B. die elektrische Verbindung zwischen der elektrochemischen Zelle 102 und den Spulen 108) sehr eng geführt werden, um die durch sie entstehende Inhomogenität des Magnetfeldes zu minimieren. Anschaulich können die Spulen der Magnetfelderzeugungsstruktur 108 derart elektrisch angeschlossen sein oder werden, dass sich ein durch die elektrische Stromzuführung in die Spule entstehendes Magnetfeld nur gering (zu vernachlässigend) auf die Magnetfeldkonfiguration, welche mittels der Magnetfelderzeugungsstruktur 108 definiert werden soll oder sein soll, auswirkt.

Ferner kann das Spulensystem aus einer einzelnen Spule bestehen (mit beispielsweise einer Windung oder mehreren Windungen), die in einer Höhe angebracht ist, die in etwa der Hälfte der Batteriehöhe entspricht. Anschaulich gesehen kann das Spulensystem aus einer einzelnen Spule 108 bestehen, wobei die einzelne Spule 108 die elektrochemische Zelle 102 umgibt, oder wobei die elektrochemische Zelle 102 innerhalb der einzelnen Spule 108 angeordnet ist.

Gemäß verschiedenen Ausführungsformen kann die Energiespeicheranordnung 100 zur Speicherung elektrischer Energie aus einem externen Stromkreis 110 verwendet werden, wobei die Energiespeicheranordnung 100 mit dem externen Stromkreis 110 elektrisch leitend verbunden sein kann oder werden kann, und wobei am negativen Pol die Metall-Ionen zu einem flüssigen Metall reduziert werden, und am positiven Pol die Metall-Atome zu Metall-Ionen oxidiert werden können.

Ferner kann ein Spulenpaar oder können mehrere Spulen parallel zueinander ausgerichtet sein und elektrisch leitend miteinander verbunden sein, derart, dass zwischen den mehreren Spulen oder dem Spulenpaar ein im Wesentlichen homogenes und/oder gleichgerichtetes Magnetfeld bereitgestellt werden kann oder sein kann, ähnlich zu einer Helmholtz-Spule oder wie eine Helmholtz-Spule. Anschaulich kann mittels mehrerer Spulen zwischen den Spulen ein im Wesentlichen gleichgerichtetes und/oder homogenes (in der Flussdichte homogenes) Magnetfeld bereitgestellt sein oder werden, ähnlich zu einer Helmholtz-Spule oder wie eine Helmholtz-Spule.

Gemäß verschiedenen Ausführungsformen kann eine Energiespeicheranordnung Folgendes aufweisen: mindestens eine elektrochemische Zelle, wobei die mindestens eine elektrochemische Zelle eine im Betrieb flüssige erste Elektrode (beispielsweise Anode), einen im Betrieb flüssigen Elektrolyten und eine im Betrieb flüssige zweite Elektrode (beispielsweise Kathode) aufweist; und eine außerhalb der mindestens einen elektrochemischen Zelle angeordnete Magnetfelderzeugungsstruktur zum Erzeugen eines Magnetfeldes, wobei die Magnetfelderzeugungsstruktur derart eingerichtet ist, dass das außerhalb der mindestens einen elektrochemischen Zelle erzeugte Magnetfeld die mindestens eine elektrochemische Zelle durchdringt.

Gemäß verschiedenen Ausführungsformen kann der Außenumfang eine Fläche sein oder als Fläche verstanden werden, beispielsweise eine Außenfläche der elektrochemischen Zelle.

## Patentansprüche

1. Energiespeicheranordnung (100) aufweisend:
• mindestens eine elektrochemische Zelle (102), wobei die mindestens eine elektrochemische Zelle (102) eine im Betrieb flüssige erste Elektrode (104a), einen im Betrieb flüssigen Elektrolyten (104b) und eine im Betrieb flüssige zweite Elektrode (104c) aufweist, wobei die erste Elektrode (104a), der Elektrolyt (104b) und die zweite Elektrode (104c) während des Betriebs eine Schichtstruktur mit mindestens einer Grenzfläche (105a, 105b) bilden; und
• eine außerhalb des Außenumfangs der mindestens einen elektrochemischen Zelle (102) angeordnete Magnetfelderzeugungsstruktur (108) zum Erzeugen eines Magnetfeldes, wobei die Magnetfelderzeugungsstruktur (108) derart eingerichtet ist, dass das erzeugte Magnetfeld die mindestens eine elektrochemische Zelle (102) durchdringt, **dadurch gekennzeichnet, dass**
• die außerhalb des Außenumfangs der mindestens einen elektrochemischen Zelle (102) angeordnete Magnetfelderzeugungsstruktur (108) mindestens einen Permanentmagneten und/oder eine elektrisch leitfähige Spulen-Anordnung zum Erzeugen des Magnetfeldes aufweist und derart eingerichtet ist, dass eine Magnetfeldkomponente des erzeugten Magnetfeldes parallel zu einer Flächennormalen der mindestens einen Grenzfläche (105a, 105b) der Schichtstruktur steht.

2. Energiespeicheranordnung gemäß Anspruch 1,
wobei die im Betrieb flüssige erste Elektrode (104a) mindestens eins von Folgendem aufweist:
• ein Metall,
• eine Metalllegierung,
• ein Halbmetall, und
• eine Halbmetalllegierung.

3. Energiespeicheranordnung gemäß Anspruch 1 oder 2,
wobei die im Betrieb flüssige zweite Elektrode (104c) mindestens eins von Folgendem aufweist:
• ein Metall,
• eine Metalllegierung,
• ein Halbmetall, und
• eine Halbmetalllegierung.

4. Energiespeicheranordnung gemäß einem der Ansprüche 1 bis 3,
wobei die Magnetfelderzeugungsstruktur (108) eine Spulen-Anordnung aufweist, derart eingerichtet, dass die mindestens eine elektrochemische Zelle (102) zwischen einer ersten Spule der Spulen-Anordnung und einer zweiten Spule der Spulen-Anordnung positioniert ist.

5. Energiespeicheranordnung gemäß Anspruch 4,
wobei die Spulen-Anordnung eine Helmholtz-Spulen-Anordnung ist.

6. Energiespeicheranordnung gemäß einem der Ansprüche 1 bis 5,
wobei die Magnetfelderzeugungsstruktur elektrisch leitend mit der mindestens einen elektrochemischen Zelle (102) verbunden ist, so dass bei einem Laden oder Entladen der mindestens einen elektrochemischen Zelle (102) ein Strom durch die Magnetfelderzeugungsstruktur (108) hindurch fließt.

7. Energiespeicheranordnung gemäß einem der Ansprüche 1 bis 6, ferner aufweisend:
mindestens eine Wärmequelle zum Erwärmen der mindestens einen elektrochemischen Zelle (102).

8. Verwenden der Energiespeicheranordnung (100) gemäß einem der Ansprüche 1 bis 7 zum Speichern elektrischer Energie mittels einer chemischen Reaktion in der mindestens einen elektrochemischen Zelle (102).

9. Energiespeicherzellenanordnung (1000) aufweisend:
• eine Zellenanordnung aufweisend mehrere elektrochemische Zellen, wobei jede der mehreren elektrochemischen Zellen eine im Betrieb flüssige erste Elektrode (104a), einen im Betrieb flüssigen Elektrolyten und eine im Betrieb flüssige zweite Elektrode (104c) aufweist, wobei die erste Elektrode (104a), der Elektrolyt (104b) und die zweite Elektrode (104c) während des Betriebs eine Schichtstruktur mit mindestens einer Grenzfläche (105a, 105b) bilden; **dadurch gekennzeichnet, dass**
• die Energiespeicherzellenanordnung (1000) mindestens eine elektromagnetische Spule (108) zum Erzeugen eines Magnetfeldes aufweist, wobei die mindestens eine elektromagnetische Spule (108) außerhalb der Zellenanordnung oder außerhalb der mehreren elektrochemischen Zellen (102) derart angeordnet und eingerichtet ist, dass das außerhalb der Zellenanordnung erzeugte Magnetfeld jede der mehreren elektrochemischen Zellen (102) durchdringt und dass eine Magnetfeldkomponente des erzeugten Magnetfeldes parallel zu einer Flächennormalen der mindestens einen Grenzfläche (105a, 105b) der Schichtstruktur steht.

## Claims

1. Energy storage arrangement (100), comprising:
• at least one electrochemical cell (102), wherein the at least one electrochemical cell (102) comprises a first electrode (104a) that is liquid during operation, an electrolyte (104b) that is liquid during operation and a second electrode (104c) that is liquid during operation, wherein the first electrode (104a), the electrolyte (104b) and the second electrode (104c) form during operation a layer structure with at least one interface (105a, 105b); and
• a magnetic field-generating structure (108), which is arranged outside the outer circumference of the at least one electrochemical cell (102) for generating a magnetic field, wherein the magnetic field-generating structure (108) is set up in such a way that the generated magnetic field penetrates the at least one electrochemical cell (102), **characterized in that**
• the magnetic field-generating structure (108) arranged outside the outer circumference of the at least one electrochemical cell (102) comprises at least one permanent magnet and/or an electrically conductive coil arrangement for generating the magnetic field and is set up in such a way that a magnetic field component of the magnetic field generated is parallel to a surface normal to the at least one interface (105a, 105b) of the layer structure.

2. Energy storage arrangement according to Claim 1,
wherein the first electrode (104a) that is liquid during operation comprises at least one of the following:
• a metal,
• a metal alloy,
• a metalloid, and
• a metalloid alloy.

3. Energy storage arrangement according to Claim 1 or 2,
wherein the second electrode (104c) that is liquid during operation comprises at least one of the following:
• a metal,
• a metal alloy,
• a metalloid, and
• a metalloid alloy.

4. Energy storage arrangement according to one of Claims 1 to 3,
wherein the magnetic field-generating structure (108) comprises a coil arrangement, which is set up in such a way that the at least one electrochemical cell (102) is positioned between a first coil of the coil arrangement and a second coil of the coil arrangement.

5. Energy storage arrangement according to Claim 4,
wherein the coil arrangement is a Helmholtz coil arrangement.

6. Energy storage arrangement according to one of Claims 1 to 5,
wherein the magnetic field-generating structure is connected to the at least one electrochemical cell (102) in an electrically conducting manner, so that a current flows through the magnetic field-generating structure (108) during charging or discharging of the at least one electrochemical cell (102).

7. Energy storage arrangement according to one of Claims 1 to 6, further comprising:
at least one heat source for heating the at least one electrochemical cell (102).

8. Use of an energy storage arrangement (100) according to one of Claims 1 to 7 for storing electrical energy by means of a chemical reaction in the at least one electrochemical cell (102).

9. Energy storage cell arrangement (1000), comprising:
• a cell arrangement comprising multiple electrochemical cells, wherein each of the multiple electrochemical cells comprises a first electrode (104a) that is liquid during operation, an electrolyte that is liquid during operation, and a second electrode (104c) that is liquid during operation, wherein the first electrode (104a), the electrolyte (104b) and the second electrode (104c) form during operation a layer structure with at least one interface (105a, 105b); **characterized in that**
• the energy storage cell arrangement (1000) comprises at least one electromagnetic coil (108) for generating a magnetic field, wherein the at least one electromagnetic coil (108) is arranged outside the cell arrangement or outside the multiple electrochemical cells (102) and set up in such a way that the magnetic field generated outside the cell arrangement penetrates each of the multiple electrochemical cells (102) and that a magnetic field component of the magnetic field generated is parallel to a surface normal to the at least one interface (105a, 105b) of the layer structure.

## Revendications

1. Arrangement accumulateur d'énergie (100) comprenant :
* au moins une cellule électrochimique (102), l'au moins une cellule électrochimique (102) possédant une première électrode (104a) liquide en fonctionnement, un électrolyte (104b) liquide en fonctionnement et une deuxième électrode (104c) liquide en fonctionnement, la première électrode (104a), l'électrolyte (104b) et la deuxième électrode (104c) formant, pendant le fonctionnement, une structure en couches ayant au moins une surface interfaciale (105a, 105b) ; et
* une structure de génération de champ magnétique (108) disposée à l'extérieur du pourtour externe de l'au moins une cellule électrochimique (102) et destinée à générer un champ magnétique, la structure de génération de champ magnétique (108) étant conçue de telle sorte que le champ magnétique généré traverse l'au moins une cellule électrochimique (102), **caractérisé en ce que**
* la structure de génération de champ magnétique (108) disposée à l'extérieur du pourtour externe de l'au moins une cellule électrochimique (102) possède au moins un aimant permanent et/ou un arrangement de bobines électriquement conducteur destiné à générer le champ magnétique et est conçue de telle sorte qu'une composante de champ magnétique du champ magnétique généré est parallèle à une normale à la surface de l'au moins une surface interfaciale (105a, 105b) de la structure en couches.

2. Arrangement accumulateur d'énergie selon la revendication 1, la première électrode (104a) liquide en fonctionnement possédant au moins l'un des éléments suivants :
* un métal,
* un alliage de métal,
* un semi-métal et
* un alliage de semi-métal.

3. Arrangement accumulateur d'énergie selon la revendication 1 ou 2, la deuxième électrode (104c) liquide en fonctionnement possédant au moins l'un des éléments suivants :
* un métal,
* un alliage de métal,
* un semi-métal et
* un alliage de semi-métal.

4. Arrangement accumulateur d'énergie selon l'une des revendications 1 à 3, la structure de génération de champ magnétique (108) possédant un arrangement de bobines qui est conçu de telle sorte que l'au moins une cellule électrochimique (102) est positionnée entre une première bobine de l'arrangement de bobines et une deuxième bobine de l'arrangement de bobines.

5. Arrangement accumulateur d'énergie selon la revendication 4, l'arrangement de bobines étant un arrangement de bobines de Helmholtz.

6. Arrangement accumulateur d'énergie selon l'une des revendications 1 à 5, la structure de génération de champ magnétique étant reliée de manière électriquement conductrice à l'au moins une cellule électrochimique (102), de sorte que lors d'une charge ou d'une décharge de l'au moins une cellule électrochimique (102), un courant circule à travers la structure de génération de champ magnétique (108).

7. Arrangement accumulateur d'énergie selon l'une des revendications 1 à 6, comprenant en outre :
au moins une source de chaleur destinée à chauffer l'au moins une cellule électrochimique (102).

8. Utilisation de l'arrangement accumulateur d'énergie selon l'une des revendications 1 à 7 pour le stockage d'énergie électrique au moyen d'une réaction chimique dans l'au moins une cellule électrochimique (102) .

9. Arrangement de cellules d'accumulation d'énergie (1000) comprenant :
* un arrangement de cellules possédant plusieurs cellules électrochimiques, chacune des plusieurs cellules électrochimiques possédant une première électrode (104a) liquide en fonctionnement, un électrolyte liquide en fonctionnement et une deuxième électrode (104c) liquide en fonctionnement, la première électrode (104a), l'électrolyte (104b) et la deuxième électrode (104c) formant, pendant le fonctionnement, une structure en couches ayant au moins une surface interfaciale (105a, 105b) ; **caractérisé en ce que**
* l'arrangement de cellules d'accumulation d'énergie (1000) possède au moins une bobine électromagnétique (108) destinée à générer un champ magnétique, l'au moins une bobine électromagnétique (108) étant disposée à l'extérieur de l'arrangement de cellules ou à l'extérieur des plusieurs cellules électrochimiques (102) et conçue de telle sorte que le champ magnétique généré à l'extérieur de l'arrangement de cellules traverse chacune des plusieurs cellules électrochimiques (102), et **en ce qu'**une composante de champ magnétique du champ magnétique généré est parallèle à une normale à la surface de l'au moins une surface interfaciale (105a, 105b) de la structure en couches.
